# EUROPÄISCHE PATENTSCHRIFT

(11) **EP 0 506 161 B1**
(45) Veröffentlichungstag und Bekanntmachung des Hinweises auf die Patenterteilung: **01.05.1996**
(21) Anmeldenummer: 92200601.0
(22) Anmeldetag: 02.03.1992
(51) Int. Cl.: C01B 17/04, B01D 53/86

(54) **Verfahren zum Erzeugen von Elementarschwefel aus einem Schwefelwasserstoff enthaltenden Gas**
Process for the preparation of sulphur from a gas containing hydrogen sulphide
Procédé pour fabrication de soufre à partir d'un gaz contenant du sulfure d'hydrogène

(30) Priorität: 26.03.1991 DE 4109891
(43) Veröffentlichungstag der Anmeldung: 30.09.1992
(73) Patentinhaber: METALLGESELLSCHAFT Aktiengesellschaft, D-60015 Frankfurt (DE)
(72) Erfinder: Lell, Rainer, W-6369 Nidderau 5 (DE); Stetzer, Klaus, W-6072 Dreieich (DE)

(56) Entgegenhaltungen:
- EP-A- 0 078 690
- EP-A- 0 215 317
- EP-A- 0 218 302
- EP-A- 0 346 218
- WO-A-87/02653
- DE-A- 3 925 574

## Beschreibung

Die Erfindung betrifft ein Verfahren zum Erzeugen von Elementarschwefel aus einem H₂S und Kohlenstoffverbindungen enthaltenden Gas in einer Claus-Anlage mit einer Brennkammer und mindestens einer katalytischen Claus-Stufe, wobei man dem Abgas der Claus-Anlage Sauerstoff zumischt und es zunächst durch einen ersten Nachbehandlungsreaktor leitet, der einen zu mindestens 80 Gew.-% aus TiO₂ bestehenden Katalysator enthält, aus dem vom ersten Nachbehandlungsreaktor kommenden Gasgemisch dampfförmigen Elementarschwefel auskondensiert und abtrennt, das Gasgemisch bei Temperaturen von 120 bis 160°C durch einen zweiten Nachbehandlungsreaktor leitet, der einen zu mindestens 80 Gew.-% aus Al₂O₃ bestehenden Katalysator enthält, und Elementarschwefel auf dem Katalysator der zweiten Nachbehandlungsstufe niederschlägt.

Ein solches Verfahren ist in DE-A-39 25 574 beschrieben, dabei wird der erste Nachbehandlungsreaktor bei für die Hydrolyse von COS und CS₂ ungünstig niedrigen Temperaturen von 160 bis 190°C betrieben.

Das Clausverfahren zum Entschwefeln von H₂S-haltigen Gasen und Erzeugen von Elementarschwefel ist bekannt, Einzelheiten sind z.B. in Ullmanns Encyklopädie der Technischen Chemie, 4. Auflage (1982), Band 21, Seiten 8 bis 26, und in DE-A-37 35 002 beschrieben. Zur Nachbehandlung der Abgase aus dem Clausverfahren und zum Erreichen hoher Entschwefelungsgrade bei diesen Gasen, die neben H₂S und SO₂ auch COS und CS₂ enthalten, hielt man es in älteren Verfahren für erforderlich, eine separate katalytische Stufe zum gleichzeitigen Hydrieren und Hydrolysieren vorzusehen, wie das z.B. in EP-B-0 054 772 und EP-A-0 078 690 beschrieben ist.

Der Erfindung liegt die Aufgabe zugrunde, die Erzeugung von Elementarschwefel beim eingangs genannten Verfahren einfach zu gestalten und dabei auf eine separate, der katalytischen Hydrierung und Hydrolyse dienenden Stufe zu verzichten. Gleichzeitig soll ein möglichst hoher Entschwefelungsgrad erreicht werden. Erfindungsgemäß wird dies dadurch erreicht, daß man in der Brennkammer der Claus-Anlage ein Gasgemisch mit 1 bis 3 Mol H₂S pro Mol SO₂ erzeugt, das Gasgemisch aus der Brennkammer in mindestens einer katalytischen Claus-Stufe bei Temperaturen über dem Taupunkt des Schwefels teilweise zu Elementarschwefel umsetzt und den Elementarschwefel in mindestens einem Schwefelkühler auskondensiert und abtrennt, aus dem letzten Schwefelkühler der Claus-Anlage ein Abgas mit der Zusammensetzung

| | | | |
|---|---|---|---|
| H₂S | 0,5 | bis | 1,5 Vol.-%, |
| SO₂ | 0,1 | bis | 0,5 Vol.-%, |
| COS | 0,02 | bis | 0,3 Vol.-%, |
| CS₂ | 0,02 | bis | 0,3 Vol.-%, |
| H₂O | 20 | bis | 50 Vol.-% |

abzieht, diesem Abgas Sauerstoff zumischt und es nach Erhitzung direkt in den ersten Nachbehandlungsreaktor leitet, in welchem am Katalysator Temperaturen im Bereich von 220 bis 400°C herrschen.

Beim erfindungsgemäßen Verfahren wird die Fähigkeit des TiO₂-reichen Katalysators ausgenutzt, bei Temperaturen insbesondere im Bereich von 220 bis 400°C nicht nur die Oxidation von H₂S zu Elementarschwefel, sondern auch die Hydrolyse von COS und CS₂ zu CO₂ und H₂S beschleunigen zu können. Dabei ist es vorteilhaft, wenn der zu mindestens 80 Gew.-% aus TiO₂ bestehende Katalysator eine Imprägnierung von 0,3 bis 5 Gew.-% aufweist, die mindestens eines der Metalle Nickel, Eisen oder Kobalt enthält. Die Herstellung eines solchen Katalysators ist in der DE-A-39 25 574 beschrieben.

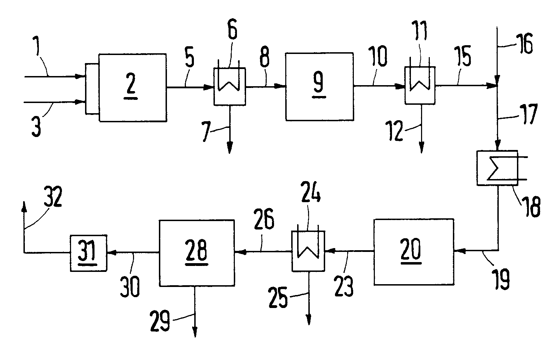

Ausgestaltungsmöglichkeiten des Verfahrens werden mit Hilfe der Zeichnung erläutert.

Das zu behandelnde, H₂S-haltige Gas, das üblicherweise CO₂ enthält und weitere Verunreinigungen und insbesondere Kohlenwasserstoffe enthalten kann, gelangt in der Leitung (1) zur Brennkammer (2) einer an sich bekannten Claus-Anlage. Der Brennkammer (2) führt man durch die Leitung (3) Sauerstoff (z.B. in Form von Luft) in dosierter Menge zu, um eine Teilverbrennung zu erreichen und ein Gasgemisch zu erzeugen, das pro Mol SO₂ 1 bis 3 Mol H₂S enthält. Das Gasgemisch, das aus der Brennkammer (2) kommt und in der Leitung (5) abgezogen wird, enthält Elementarschwefel, den man im Kühler (6) auskondensiert und in der Leitung (7) abführt.

Das in der Leitung (8) abströmende Gasgemisch wird in der Clauskatalyse (9) weiterbehandelt, in welcher in einer oder mehreren Stufen 2 H₂S + SO₂ zu Elementarschwefel und Wasser umgewandelt werden. Man verwendet dabei z.B. Katalysatoren auf der Basis von Al₂O₃ und/oder TiO₂ und arbeitet bei Temperaturen im Bereich von etwa 200 bis 400°C. Das Abgas der Clauskatalyse wird in der Leitung (10) zu einem Kühler (11) geführt, in welchem dampfförmiger Elementarschwefel kondensiert und in der Leitung (12) abgeführt wird.

Das die Claus-Anlage in der Leitung (15) verlassende Abgas hat folgende Zusammensetzung:

| | | | |
|---|---|---|---|
| H₂S | 0,5 | bis | 1,5 Vol.-% |
| SO₂ | 0,1 | bis | 0,5 Vol.-% |
| COS | 0,02 | bis | 0,3 Vol.-% |
| CS₂ | 0,02 | bis | 0,3 Vol.-% |
| H₂O | 20 | bis | 50 Vol.-% |

Diesem Gasgemisch mischt man Sauerstoff (z.B. Luft) zu, der in der Leitung (16) herangeführt wird. Die Menge des Sauerstoffs wird so dosiert, daß sie für die nachfolgenden Oxidationsreaktionen ausreicht. Das Gasgemisch strömt in der Leitung (17) zu einem Erhitzer (18), in welchem die Temperatur durch indirekten Wärmeaustausch auf 220 bis 400°C angehoben wird. Durch die Leitung (19) gelangt das Gasgemisch zu einem ersten Nachbehandlungsreaktor (20). Dieser Reaktor enthält ein Festbett aus einem körnigen TiO₂-Katalysator, der zu mindestens 80 Gew.-% aus TiO₂ besteht und vorzugsweise daneben noch mit Nickel, Eisen oder Kobalt imprägniert ist. In diesem ersten Nachbehandlungsreaktor (20) wird bei Temperaturen im Bereich von 220 bis 400°C einerseits H₂S zu Elementarschwefel oxidiert und andererseits hydriert man COS und CS₂ zu CO₂ und H₂S. Da man hierbei oberhalb des Taupunkts des Schwefels arbeitet, enthält das in der Leitung (23) abströmende Gasgemisch dampfförmigen Elementarschwefel, den man im Kühler (24) auskondensiert und durch die Leitung (25) abzieht.

Das restliche Gas gelangt durch die Leitung (26) zu einem zweiten Nachbehandlungsreaktor (28), der ein Festbett aus einem Al₂O₃-Katalysator enthält. Dieser Katalysator besteht zu mindestens 80 Gew.-% aus Al₂O₃, er kann daneben noch Ni, Fe oder Co als Imprägnierung enthalten. Im zweiten Reaktor (28), in welchem Temperaturen von 120 bis 160°C herrschen, wird erneut H₂S mit SO₂ zu Elementarschwefel umgesetzt, wobei sich der Schwefel auf dem Katalysator niederschlägt. Von Zeit zu Zeit wird das mit Elementarschwefel beladene Katalysatorbett durch Erhitzen und Spülen, z.B. mit Wasserdampf, regeneriert, wobei der Schwefel durch die Leitung (29) abgezogen wird. Während der Regenerierung wird ein zweites, unbeladenes Katalysatorbett in das Verfahren eingeschaltet, das in der Zeichnung nicht dargestellt ist.

Das den zweiten Nachbehandlungsreaktor (28) in der Leitung (30) verlassende Abgas weist pro kmol noch etwa 15 bis 40 mg (200 bis 600 ppm) H₂S und etwa 15 bis 40 mg (100 bis 300 ppm) SO₂ auf. Es ist deshalb zweckmäßig, dieses Gas durch eine Nachverbrennung (31) zu leiten, bevor es über den Kamin (32) in die Atmosphäre gelangt.

### Beispiel (hierbei liegen die Temperaturen im ersten Nachbehandlungsreaktor außerhalb des Gegenstands des Patentanspruchs 1)

Einer Anlage mit der in der Zeichnung dargestellten Verfahrensführung wird durch die Leitung (1) ein H₂S- und CO₂-haltiges Gas in einer Menge von 142,8 kmol/h (3198 Nm³/h) zugeführt, das eine Temperatur von 32°C und einen Druck von 1,6 bar aufweist. Die Zusammensetzung des Gases ist folgende:

| | |
|---|---|
| H₂S | 87,1 Mol-% |
| CO₂ | 8,4 Mol-% |
| H₂O | 3,0 Mol-% |
| CH₄ | 1,0 Mol-% |
| C₂H₆ | 0,4 Mol-% |
| C₃H₈ | 0,1 Mol-%. |

Dieses Gas wird in der Brennkammer (2) mit 282,3 kmol/h (6323 Nm³/h) Luft von 60°C teilweise verbrannt, das Verbrennungsgas in der Leitung (5) weist ein Molverhältnis H₂S : SO₂ von 1,88 : 1 auf. Das Gasgemisch wird im Kühler (6) auf 250°C gekühlt, wobei man pro Stunde 2594 kg Elementarschwefel abzieht. Eine Erwärmung vor der Clauskatalyse (9) auf 280°C schließt sich an.

Die Clauskatalyse besteht aus zwei Stufen, bei denen als Katalysator Al₂O₃ verwendet wird. In der Clauskatalyse und im Kühler (11) fallen pro Stunde insgesamt 1277 kg Elementarschwefel an. Das Abgas aus der Clauskatalyse wird im Kühler (11) auf 135°C gekühlt. Das Gas, das in einer Menge von 372,8 kmol/h (8350 Nm³/h) durch die Leitung (15) strömt, hat die in der nachfolgenden Tabelle in Spalte A angegebene Zusammensetzung.

| | A | B |
|---|---|---|
| H₂S | 0,70 Mol-% | 0,30 Mol-% |
| SO₂ | 0,14 Mol-% | 0,15 Mol-% |
| H₂O | 32,50 Mol-% | 32,72 Mol-% |
| CO | 0,90 Mol-% | 0,89 Mol-% |
| CO₂ | 3,06 Mol-% | 3,06 Mol-% |
| COS | 0,03 Mol-% | 5 mg/kmol (40 ppm) |
| CS₂ | 0,02 Mol-% | 3 mg/kmol (20 ppm) |
| N₂ | 59,05 Mol-% | 59,31 Mol-% |
| H₂ | 3,60 Mol-% | 3,56 Mol-% |
| S (elementar) | 8,3 kg/h | 4,75 kg/h |

Dem Gas werden durch die Leitung (16) 4,42 kmol/h (99 Nm³/h) Luft zugegeben, das Gasgemisch verläßt den Erhitzer (18) mit einer Temperatur von 205°C. Der erste Nachbehandlungsreaktor (20) weist einen Katalysator auf, der aus TiO₂, imprägniert mit 5 Gew.-% Fe, besteht, der Katalysator des zweiten Nachbehandlungsreaktors (28) besteht aus Al₂O₃, imprägniert mit 1 Gew.-% Ni. Pro Stunde werden über die Leitung (25) 55 kg und über die Leitung (29) 42 kg Elementarschwefel abgezogen. Das Gas in der Leitung (26) hat die in der Tabelle in Spalte B angegebene Zusammensetzung. Dieses Gas, dessen Menge 376,5 kmol/h (8430 Nm³/h) beträgt, weist eine Temperatur von 125°C auf.

Das gereinigte Gas in der Leitung (30) enthält pro kmol noch die folgenden schwefelhaltigen Komponenten:

| | |
|---|---|
| H₂S | 38 mg (550 ppm) |
| SO₂ | 36 mg (275 ppm) |
| COS | 5 mg ( 40 ppm) |
| CS₂ | 3 mg ( 20 ppm). |

Es wird zur Umwandlung aller schwefelhaltigen Komponenten in Schwefeldioxid einer Nachverbrennung zugeführt, bevor man es in die Atmosphäre leitet.

## Patentansprüche

1. Verfahren zum Erzeugen von Elementarschwefel aus einem H₂S und Kohlenstoffverbindungen enthaltenden Gas in einer Claus-Anlage mit einer Brennkammer und mindestens einer katalytischen Claus-Stufe, wobei man dem Abgas der Claus-Anlage Sauerstoff zumischt und es zunächst durch einen ersten Nachbehandlungsreaktor leitet, der einen zu mindestens 80 Gew.-% aus TiO₂ bestehenden Katalysator enthält, aus dem vom ersten Nachbehandlungsreaktor kommenden Gasgemisch dampfförmigen Elementarschwefel auskondensiert und abtrennt, das Gasgemisch bei Temperaturen von 120 bis 160°C durch einen zweiten Nachbehandlungsreaktor leitet, der einen zu mindestens 80 Gew.-% aus Al₂O₃ bestehenden Katalysator enthält, und Elementarschwefel aus dem Katalysator der zweiten Nachbehandlungsstufe niederschlägt, dadurch gekennzeichnet, daß man in der Brennkammer der Claus-Anlage ein Gasgemisch mit 1 bis 3 Mol H₂S pro Mol SO₂ erzeugt, das Gasgemisch aus der Brennkammer in mindestens einer katalytischen Claus-Stufe bei Temperaturen über dem Taupunkt des Schwefels teilweise zu Elementarschwefel umsetzt und den Elementarschwefel in mindestens einem Schwefelkühler auskondensiert und abtrennt, aus dem letzten Schwefelkühler der Claus-Anlage ein Abgas mit der Zusammensetzung
| | | | |
|---|---|---|---|
| H₂S | 0,5 | bis | 1,5 Vol.-%, |
| SO₂ | 0,1 | bis | 0,5 Vol.-%, |
| COS | 0,02 | bis | 0,3 Vol.-%, |
| CS₂ | 0,02 | bis | 0,3 Vol.-%, |
| H₂O | 20 | bis | 50 Vol.-% |
abzieht, diesem Abgas Sauerstoff zumischt und es nach Erhitzung direkt in den ersten Nachbehandlungsreaktor leitet, in welchem am Katalysator Temperaturen im Bereich von 220 bis 400°C herrschen.

2. Verfahren nach Anspruch 1, dadurch gekennzeichnet, daß der zu mindestens 80 Gew.-% aus TiO₂ bestehende Katalysator eine Imprägnierung von 0,3 bis 5 Gew.-% aufweist, die mindestens eines der Metalle Nickel, Eisen oder Kobalt enthält.

## Claims

1. A method for producing elemental sulphur from a gas containing H₂S and carbon compounds in a Claus plant with a combustion chamber and at least one catalytic Claus stage, wherein oxygen is admixed with the exhaust gas of the Claus plant and the mixture is initially passed through a first subsequent treatment reactor which contains a catalyst consisting of at least 80% by weight TiO₂, vaporous elemental sulphur is condensed out and separated off from the gas mixture coming from the first subsequent treatment reactor, the gas mixture is passed at temperatures of 120 to 160°C through a second subsequent treatment reactor which contains a catalyst consisting of at least 80% by weight Al₂O₃, and elemental sulphur is precipitated from the catalyst of the second subsequent treatment stage, characterised in that a gas mixture containing 1 to 3 mol H₂S per mol SO₂ is produced in the combustion chamber of the Claus plant, the gas mixture from the combustion chamber is reacted partly to elemental sulphur in at least one catalytic Claus stage at temperatures above the dew point of the sulphur and the elemental sulphur is condensed out and separated in at least one sulphur condenser, an exhaust gas of the composition
| | | | |
|---|---|---|---|
| H₂S | 0.5 | to | 1.5% by volume, |
| SO₂ | 0.1 | to | 0.5% by volume, |
| COS | 0.02 | to | 0.3% by volume, |
| CS₂ | 0.02 | to | 0.3% by volume, |
| H₂O | 20 | to | 50 % by volume, |
is removed from the final sulphur condenser of the Claus plant, oxygen is admixed to this exhaust gas and it is passed after heating directly into the first subsequent treatment reactor in which temperatures in the range of 220 to 400°C prevail at the catalyst.

2. A method according to Claim 1, characterised in that the catalyst consisting of at least 80% by weight TiO₂ has an impregnation of 0.3 to 5% by weight which contains at least one of the metals nickel, iron or cobalt.

## Revendications

1. Procédé de production de soufre élémentaire à partir d'un gaz contenant H₂S et des composés du carbone dans une installation Claus avec une chambre de combustion et au moins un étage Claus catalytique, dans lequel on ajoute de l'oxygène à l'effluent de l'installation Claus et on l'envoie d'abord dans un premier réacteur de post-traitement qui contient un catalyseur constitué à 80 % en poids au moins de TiO₂, on condense et on sépare du soufre élémentaire sous forme de vapeur à partir du mélange gazeux venant du premier réacteur de post-traitement, on envoie le mélange gazeux à des températures de 120 à 160 °C dans un second réacteur de post-traitement qui contient un catalyseur constitué à 80 % en poids au moins d'Al₂O₃ et on précipite du soufre élémentaire sur le catalyseur du second étage de post-traitement, caractérisé en ce qu'on produit dans la chambre de combustion de l'installation Claus un mélange gazeux contenant 1 à 3 modes de H₂S par mode de SO₂, on fait réagir partiellement le mélange gazeux sortant de la chambre de combustion dans au moins un étage Claus catalytique à des températures supérieures au point de rosée du soufre pour donner du soufre élémentaire, on condense et on sépare le soufre élémentaire dans au moins un réfrigérant à soufre, on soutire du dernier réfrigérant à soufre de d'installation Claus un gaz résiduaire ayant la composition suivante :
| | |
|---|---|
| H₂S | 0,5 à 1,5 % en vol. |
| SO₂ | 0,1 à 0,5 % en vol. |
| COS | 0,02 à 0,3 % en vol. |
| CS₂ | 0,02 à 0,3 % en vol. |
| H₂O | 20 à 50 % en vol., |
on ajoute à ce gaz résiduaire de l'oxygène et on l'envoie directement après chauffage dans de premier réacteur de post-traitement dans lequel règnent sur le catalyseur des températures dans le domaine de 220 à 400 °C.

2. Procédé selon la revendication 1, caractérisé en ce que le catalyseur constitué à 80 % en poids au moins de TiO₂ présente une imprégnation de 0,3 à 5 % en poids, qui contient au moins un des métaux nickel, fer ou cobalt.
